## Europäisches Patentamt

### European Patent Office

### Office européen des brevets

(11) Numéro de publication: **0 200 630**
**B1**

(12) **FASCICULE DE BREVET EUROPEEN**

(45) Date de publication du fascicule du brevet:
**05.07.89**

(21) Numéro de dépôt: **86400836.2**

(22) Date de dépôt: **17.04.86**

(51) Int. Cl.⁴: **B64D 17/32**

(54) **Boucle ventrale de parachute pour siège éjectable.**

(30) Priorité: **26.04.85 FR 8506418**

(43) Date de publication de la demande:
**10.12.86 Bulletin 86/45**

(45) Mention de la délivrance du brevet:
**05.07.89 Bulletin 89/27**

(84) Etats contractants désignés:
**AT BE CH DE GB IT LI LU NL SE**

(56) Documents cités:
**EP-A- 0 161 664**
**FR-A- 1 365 422**
**FR-A- 2 116 673**
**GB-A- 727 593**
**GB-A- 905 792**
**US-A- 3 510 921**

(73) Titulaire: **Delajoud, Pierre, 109, rue de Longchamp, F-92200 Neuilly sur Seine(FR)**
Titulaire: **DESGRANGES & HUOT, 56 rue des Ecoles B.P. 125, F-93303 Aubervilliers Cedex(FR)**

(72) Inventeur: **Delajoud, Pierre, 109 rue de Longchamp, F-92200 Neuilly(FR)**

(74) Mandataire: **Ballot, Paul Denis Jacques, Cabinet Ballot 84, avenue Kléber, F-75116 Paris(FR)**

## Description

La présente invention concerne une boucle ventrale de parachute destinée à équiper une siège éjectable.

Une telle boucle a pour object, d'une part, d'assurer le maintien du pilote sur son siège, lors des évolutions de l'avion et, d'autre part, après une éjection éventuelle, de maintenir le pilot attaché à son parachute, après qu'il a été détaché du siège.

Une boucle ventrale de parachute pour siège éjectable doit permettre au pilote de se libérer des sangles qui maintiennent normalement le pilote sur le siège, pour qu'il puisse sortir de l'avion après un vol et se libérer rapidement de son parachute en cas d'éjection.

Plus particulièrement la boucle ventrale est fixée, d'une part, sur une sangle centrale qui émerge entre les jambes du pilote et reçoit, d'autre part, deux bélières trouées qui portent des sangles passant sur les épaules du pilote. En outre, avant d'être introduite dans la boucle ventrale, chaque bélière est traversée par une sangle latérale qui est elle-même traversée par une sangle de jambe.

On réalise ainsi un arrimage en sept points qui maintient fermement le pilote sur son siège tant qu'il n'ouvre pas volontairement la boucle ventrale.

Le brevet français antérieur n° 1.365.422 de la demanderesse correspondant aux caractéristiques selon le préambule de la revendication 1, décrit une boucle ventrale de sécurité comportant "un puissant ressort hélicoïdal de compression" destiné à se détendre brusquement par de simples rotations de la poignée de commande d'éjection, cette détente assurant l'effacement de doigts ou tenons qui normalement verrouillent les bélières lorsque l'usager est attaché. Une telle disposition présente un risque de malfonctionnement en cas de rupture du ressort ou de déplacement incorrect des pièces mécaniques devant assurer la libération des bélières.

Le brevet français n° 2.116.673 prévoit, dans une boucle ventrale, simultanément un dispositif d'actionnement général agissant sur l'ensemble des tenons de verrouillage des bélières afin d'effacer les tenons et donc de libérer les bélières et un second dispositif d'actionnement partiel à commande indépendante agissant seulement sur certains desdits tenons pour les effacer.

Le brevet de Etats-Unis n° 3.510.921 et les brevets britanniques n° 727.593 et 905.792 décrivent des dispositifs de boucle ventrale à libération rapide, comportant, comme les dispositifs des deux brevets français précités, des doigts ou tenons qui maintiennent normalement les bélières et qui sont effaçables sous une commande d'éjection afin de libérer les bélières.

Dans ces cinq brevets antérieurs, les pièces qui se déplacent lors de la libération des bélières ont pour effet d'augmenter la résistance mécanique opposée à la libération, d'où inconvénient majeur.

Au contraire, conformément à la présente invention, on prévoit l'échappement des bélières, et non de doigts ou tenons, sous l'effet de la commande d'éjection, d'où résistance réduite à la libération volontaire des bélières, car on réduit le nombre des pièces qui se déplacent lors de la libération. En outre on ne prévoit pas, selon la présente demande, de ressort moteur, ce qui permet à l'usager de se dégager même si les éléments élastiques qui comporte la boucle ventrale cassent, et il suffit à l'usager d'agir sur une seule palette, alors que dans le brevet français n° 1.365.422 précité il y avait un ressort moteur dont la rupture empêchait l'éjection et il fallait agir sur deux palettes de commande de la libération, ce qui exigeait un mécanisme plus compliqué.

La présente invention a pour but de réaliser une boucle ventrale très compacte, en forme sensiblement de galette circulaire relativement plate, ayant par exemple des dimensions extérieures de l'ordre de 70 mm de diamètre et de 35 mm de hauteur, boucle assurant tant un maintien très sûr des bélières, qu'un dégagement volontaire certain de celles-ci, même en cas de rupture decertains éléments élastiques de la boucle, tout en empêchant une libération involontaire des bélières.

Plus particulièrement la boucle comporte, en plus d'un bouton rotatif, des palettes saillantes de commande dont l'enforcement autorise la mise en place des bélières qui peuvent être introduites l'une après l'autre sans que l'introduction de la deuxième bélière provoque l'échappement de la première.

L'éjection des bélières de la boucle ventrale peut être produite au moyen d'une seule main (la main gauche ou la main droite indifféremment), mais elle n'est réalisée effectivement que lors d'une double manoeuvre volontaire, à savoir l'enfoncement des deux palettes suivi de la rotation dans un sens quelconque du bouton prévu à la partie supérieure de la boucle ventrale (dans la suite de la description on entend par partie "inférieure" la partie qui est du côté du ventre du pilote lorsque la boucle est en position et par partie "supérieure" la partie opposée).

Une boucle ventrale selon l'invention présente également l'avantage qu'en fin d'action volontaire sur les palettes et sur le bouton, un crantage maintient la boucle en position ouverte, tandis que la rotation en sens inverse du bouton permet de ramener la boucle dans la position normale de repos, les palettes étant escamotées dans la position ouverte et faisant saillie dans la position normale de repos.

La sécurité de la boucle ventrale selon l'invention est réalisée de plusieurs manières:
- une palette ne peut reprendre sa position "sortie" si la bélière qui lui correspond n'est pas correctement verrouillée dans son logement, les palettes jouant donc le rôle de témoin de fonctionnement normal;
- une action sur une seule palette ne suffit pas à autoriser la rotation du bouton; de même une action sur les deux palettes, sans rotation du bouton, ne permet pas de libérer les bélières.

Il faut donc appliquer un couple sur le bouton pour vaincre la résistance opposée par l'ensemble mécanique et commencer l'éjection des bélières.

L'introduction de chaque bélière nécessite l'application d'un effort qui permet de sentir nettement le verrouillage de celle-ci dans la boucle. Elle est accompagnée d'un claquement, nettement audible, au moment de la mise en place correcte. La bélière verrouillée ne peut être désengagée sans recourir à la phase éjection (enfoncement des deux palettes, puis rotation du bouton).

Après la phase éjection, un retour accidentel à la position normale de la boucle ne permet pas le re-verrouillage des bélières, même si celles-ci sont encore engagées dans leur logement.

En fin de course d'éjection, un crantage maintient la boucle en position éjectée. Une action sur les palettes est nécessaire pour revenir en position repos.

L'éjection des bélières se fait par l'action directe du pilote. L'effort est transmis positivement depuis la main de celui-ci jusqu'aux bélières sans recourir à une action différée mettant en oeuvre un organe intermédiaire (ressort par exemple).

La rupture d'un organe élastique ne compromettrait donc pas la libération des bélières par l'action du pilote.

L'invention a donc pour objet une boucle ventrale de parachute pour siège éjectable, qui comprend, d'une part, un corps comportant une embase ventrale et une bague avec des fentes pour la réception des palettes de commande et des logements pour la réception des bélières, et, d'autre part, un bouton de commande pouvant tourner par rapport au corps, et qui est caractérisée en ce qu'elle comprend en outre, à l'intérieur de l'ensemble du corps et du bouton:
- des plots faisant saillie à partir de l'embase en regard des logements pour arrêter les trous ménagés classiquement dans les bélières,
- une pièce rotative avec des dents périphériques à flancs inclinés constituant des rampes, les sommets des dents étant dirigés du côté opposé à l'embase,
- des moyens transmettant la rotation du bouton à la pièce rotative,
- une pièce éjectrice avec des galets roulant sur lesdits flancs constituant rampes, de manière que la rotation de la pièce avec des dents provoque la translation axiale de la pièce éjectrice, ladite pièce éjectrice portant des fourches aptes à agir sur les bélières pour les éloigner de l'embase en même temps qu'elles,
- des moyens élastiques sollicitant les galets sur les rampes des dents, et
- une bague élastique apte à éjecter les bélières hors de leurs logements lorsque la pièce éjectrice vient dans sa position éloignée de l'embase.

La boucle ventrale selon l'invention peut de préférence comporter en outre:
- des verrous aptes à basculer entre une première position dans laquelle ils verrouillent les bélières et une seconde position dans laquelle ils libèrent ces bélières,
- des moyens élastiques aptes à maintenir normalement les verrous dans leur première position de verrouillage des bélières, et
- des moyens pour amener les verrous dans leur seconde position de libération des bélières lorsque la pièce éjectrice vient dans sa position éloignée de l'embase, avec ses galets aux sommets des dents de la pièce rotative.

Avantageusement la boucle ventrale peut également comporter:
- des coulisseaux de verrouillage,
- des moyens de guidage des coulisseaux, aptes à les faire se déplacer simultanément en sens opposés depuis une première position de rapprochement vers une seconde position d'éloignement sous l'effet de l'enfoncement des palettes, et
- des moyens élastiques tendant à éloigner les palettes et donc à rapprocher les coulisseaux.

Par ailleurs on peut prévoir que le bouton est fixé sur le corps grâce à un boulon comportant une tête à n languettes flexibles qui coopèrent avec n+1 ou n-1 trous pratiqués dans la partie supérieure du bouton, le repliement d'une des languettes dans un desdits trous - repliement qui est toujours possible - empêchant tout desserrage du bouton.

L'invention pourra, de toute façon, être bien comprise à l'aide du complément de description qui suit, ainsi que des dessins ci-annexés, lesquels complément et dessins sont, bien entendu, donnés surtout à titre d'indication.

Les figures 1 et 2 sont deux vues extérieures, en élévation suivant deux directions à 90° l'une de l'autre, d'une boucle ventrale dotée des perfectionnements selon l'invention, les palettes étant saillantes.

Les figures 3 et 4 sont deux vues extérieures, en plan et par-dessus, de la même boucle ventrale en position verrouillée, l'étiquette supérieure ayant été supprimée de la figure 4 qui est une vue partielle à plus grande échelle.

Les figures 5 et 6 représentent deux coupes, par deux plans verticaux perpendiculaires entre eux, de ladite boucle ventrale en position verrouillée.

La figure 7 est une coupe analogue à celle de la figure 6, toutefois après déverrouillage volontaire de la boucle.

Les figures 8 et 9 sont des coupes par VIII-VIII et IX-IX respectivement de la figure 5.

Les figures 10 et 11 sont des vues en plan par dessous du bouton avec certaines pièces en position dans celui-ci, la boucle étant verrouillée pour la figure 10 et déverrouillée pour la figure 11.

La figure 12, enfin, est une vue en plan par dessus de la boucle en position déverrouillée, le bouton étant enlevé.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser une boucle ventrale de parachute pour siège éjectable, on s'y prend comme suit ou d'une manière analogue.

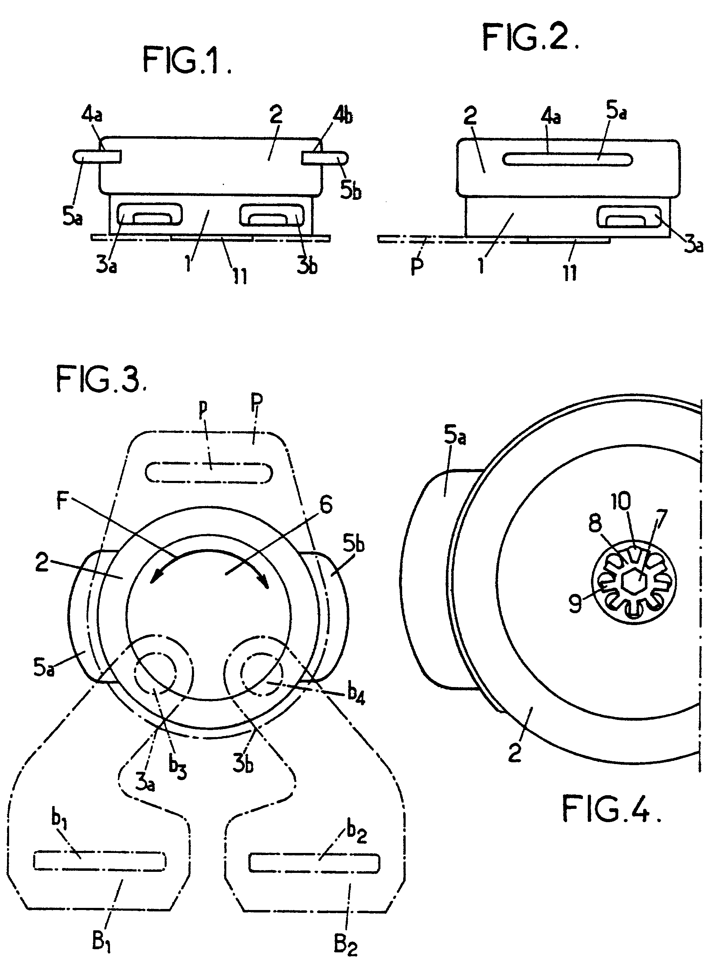

Se référant tout d'abord aux figures 1 à 3, on voit qu'une boucle ventrale selon l'invention a la forme générale d'un cylindre droit ou galette de section circulaire, de hauteur plus petite que son diamètre, par exemple d'une hauteur totale de l'ordre de 35 mm pour un diamètre de l'ordre de 70 mm (à la partie inférieure).

Cette boucle comprend un corps 1 et un bouton tournant 2 de diamètre légèrement supérieur à celui du corps 1.

Le corps présente deux ouvertures 3a, 3b, sensiblement à 90° l'une de l'autre et destinées à recevoir les deux bélières B₁, B₂ (en traits mixtes sur la figure 3) de type standard traversées par les fentes b₁ et b₂ qui reçoivent les deux sangles d'épaule du pilote.

On prévoit, dans deux fentes 4a, 4b du bouton 2, deux palettes enfonçables 5a, 5b qui permettent de verrouiller en position et, en combinaison avec le bouton rotatif 2, de déverrouiller les bélières B₁ et B₂.

En plus de ces bélières, la boucle ventrale coopère avec une plaquette P (représentée en traits mixtes sur les figures 2 et 3) traversée par une fente p qui reçoit la sangle centrale destinée à émerger entre les jambes du pilote.

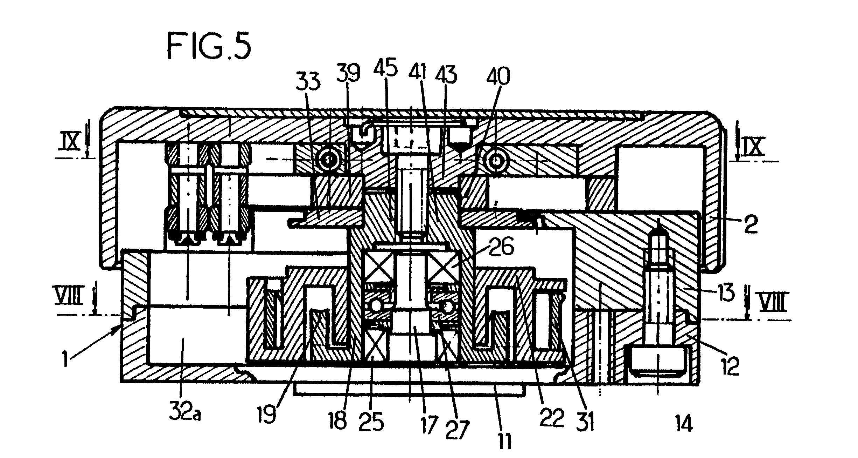

Trois vis (non représentées) à tête fraisée maintiennent la plaquette P en position sur la boucle ventrale, la plaquette P comportant un orifice central dans lequel vient s'emboîter sans jeu un bossage cylindrique 11 prévu à la partie inférieure du corps 1 (figures 5, 6 et 7).

Pour terminer avec la description des figures 1 à 3, on signalera que le bouton 2 porte à sa partie supérieure une étiquette circulaire 6 (figure 3) sur laquelle figurent, d'une part, une double flèche F indiquant au pilote la double possibilité de rotation du bouton 2, notamment pour déverrouiller les bélières B₁ et B₂, et, d'autre part, des inscriptions ou prescriptions (non portées sur la figure 3).

L'enlèvement de cette étiquette 6 découvre, comme illustré sur la figure 4, les moyens de fixation du bouton 2 sur le corps 1, à savoir un boulon 7 comportant une tête 8 à n languettes flexibles 9 qui coopèrent avec n+1 (ou n-1) trous 10 pratiqués dans la partie supérieure du bouton 2, n étant un entier plus grand que 5.

De ce fait il y aura toujours, quelle que soit la position angulaire du boulon 7 en fin de serrage, une languette 9 en face d'un trou 10 (par un effet de "vernier") et il sera donc toujours possible, en fin de serrage du boulon 7, de replier une languette 9 dans un trou 10, ce qui immobilise à demeure le boulon 7. Le montage de la figure 4 réalise donc un boulon indesserable.

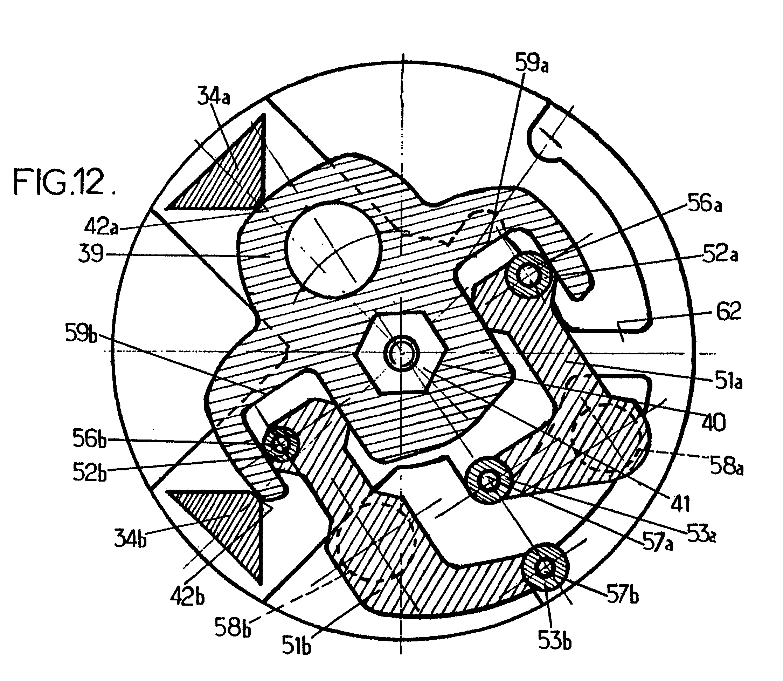

On va décrire maintenant la structure interne de la boucle ventrale avec référence aux figures 5 à 12 et tout d'abord aux figures 5 à 8.

Le corps 1 est essentiellement constitué par une embase ventrale 12 formant fond et par une bague 13; trois vis 14 assurent l'assemblage de l'embase 12 et de la bague 13 pour former le corps 1.

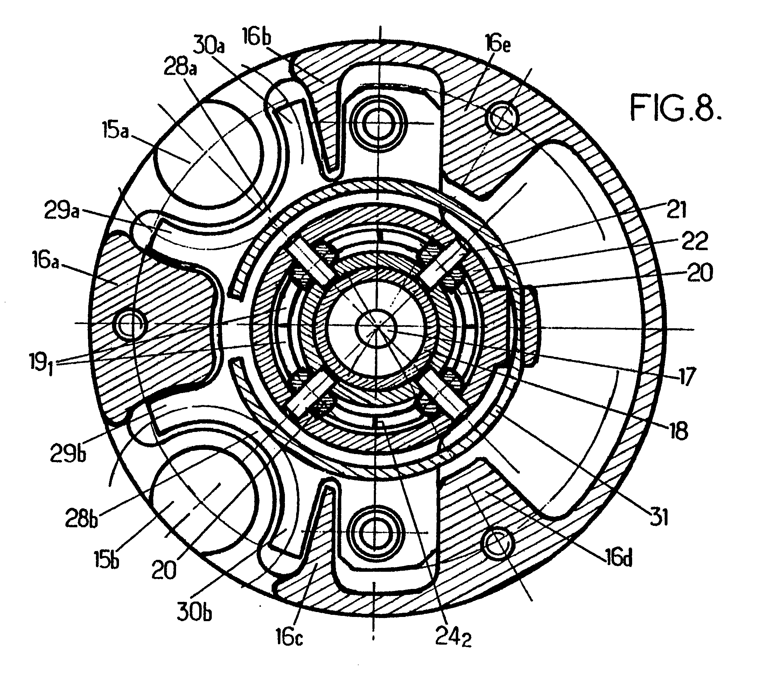

L'embase 12 réalise la fonction de résistance de la boucle ventrale. Elle est donc constituée par une pièce massive dans laquelle ont été taillés des évidements pour laisser subsister deux plots 15a, 15b et cinq protubérances 16a, 16b, 16c, 16d et 16e autour d'un axe central 17 (voir en particulier la figure 8).

Les plots 15a, 15b permettent de réaliser la retenue en position des bélières B₁ et B₂ (de la figure 3) et à cet effet ils sont disposés suivant deux directions faisant entre elles un angle de 90°.

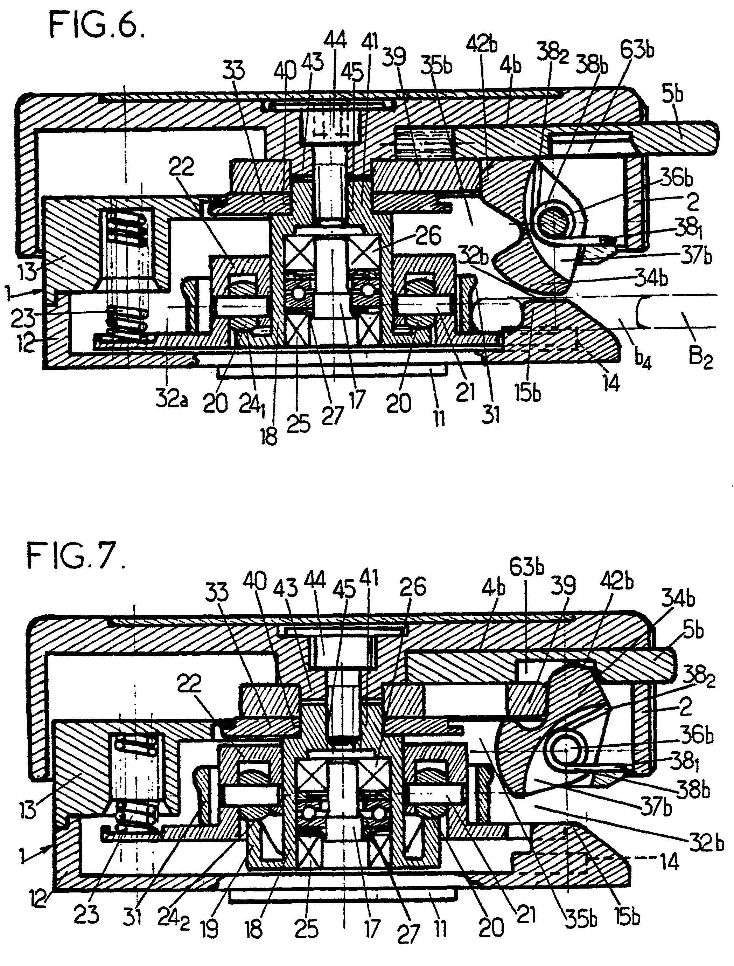

L'axe central 17 permet le guidage axial d'une pièce rotative 18 à quatre dents périphériques 19 dirigées vers le haut et dont les flancs 19₁ forment des rampes qui coopèrent avec quatre galets 20 disposés en croix (c'est-à-dire suivant des directions décalées de 90°), ces galets étant montés sur des axes 21 portés par une pièce éjectrice 22 réalisant l'éjection des bélières. La rotation de la pièce 18, produite par la rotation du bouton 2, provoque, du fait des rampes constituées par les flancs 19₁ des dents 19, la montée de la pièce éjectrice 22 - qui repose normalement, sous l'effet de deux ressorts de rappel 23, dans sa position basse (figure 6), avec ses quatre galets 20 en bras des rampes, c'est-à-dire aux pieds 24₁ des dents 19 - vers sa position haute (figure 7) avec ses quatre galets 20 au sommet 24₂ des dents 19, en réalisant ainsi une transformation du mouvement rotatif du bouton 2 en un mouvement de translation axiale de la pièce éjectrice 22.

La pièce rotative 18 est montée sur l'axe central 17 pour pouvoir tourner grâce à deux roulements à billes droits 25 et 26, tandis qu'une butée à billes 27 encaisse l'effort exercé par la pièce 18 sur l'embase 12.

La pièce éjectrice 22 comporte deux fourches 28a et 28b constituées chacune par deux ailes 29a, 29b et 30a, 30b dirigées vers l'extérieur (voir en particulier la figure 8). En position verrouillée de la boucle, les ailes 29a et 29b encadrent la protubérance 16a, chaque fourche 28a, 28b entourant un plot 15a, 15b.

La remontée de la pièce éjectrice 22, sous l'effet de la rotation de la pièce 18 à rampes, a pour résultat la remontée des fourches 28a et 28b de cette pièce éjectrice 22, ce qui va faire remonter également les bélières B₁ et B₂ qui reposent sur les fourches et les faire échapper des plots de retenue 15a, 15b qui cessent de pénétrer dans les trous b₃ et b₄ des bélières (figure 3). L'expulsion positive vers l'extérieur des bélières B₁ et B₂ est assurée par une bague ressort 31, normalement bandée en étant resserrée, mais qui peut se dilater lorsque les bélières ne sont plus retenues par les plots 15a, 15b.

Cette évolution est illustrée par le passage de la situation représentée sur la figure 6 (position verrouillée) à celle représentée sur la figure 7 (position d'éjection des bélières).

Quant à la bague 13, solidaire de l'embase 12, elle présente deux encoches 32a, 32b qui débouchent en 3a, 3b (figures 1 et 2) et une butée 33 qui interdit la remontée de la pièce 18 à rampes.

On va exposer maintenant les moyens de verrouillage en position des bélières B₁ et B₂.

Le verrouillage en position de chaque bélière dans son logement ou encoche 32a, 32b est assuré essentiellement par un verrou 34a, 34b (voir également figu res 10 à 12), chaque verrou étant logé dans un espace 35a, 35b ménagé dans le corps 1 et le bouton 2.

Chaque verrou 34a, 34b est monté sur un axe tel que 36b autour duquel il peut tourner. Chaque verrou comporte un évidement fraisé tel que 37b qui permet de loger un ressort de torsion double tel que 38b enroulé autour de l'axe tel que 36b et s'appuyant d'un côté 38₁ sur le corps 1 et de l'autre 38₂ sur le verrou 34a, 34b.

A l'intérieur du corps 1 est disposée une came 39 qui comporte en son centre un mortaisage hexagonal 40 dans lequel vient normalement se loger l'extrémité hexagonale 41 de la pièce rotative 18 à rampes, la came 39 venant s'appuyer sur la butée 33.

Chaque ressort tel que 38b maintient le becquet 42a, 42b du verrou 34a, 34b correspondant en contact avec la came 39, comme on le voit en particulier sur la figure 6. Par contre lorsque la came 39 tourne, entraînée en rotation par la rotation de l'extrémité supérieure 41 de la pièce 18, les verrous 34a et 34b basculent pour venir occuper la position illustrée sur la figure 7, les becquets 42a, 42b échappent de la came 39, ce qui libère le passage, dans les logements 32a et 32b, pour les bélières $B_1$ et $B_2$.

On va terminer la description de la structure interne de la boucle ventrale en exposant les moyens de commande de cette boucle.

Le bouton 2 présente en son centre une protubérance hexagonale 43 qui vient se positionner à l'intérieur de mortaisage hexagonal 40 de la came 39.

Une vis 44 traverse le bouton 2 et vient se fixer dans un taraudage 45 de la pièce 18, emprisonnant ainsi la came 39 et la butée 33 entre le bouton 2 et la pièce 18. Une rotation du bouton 2 dans un sens ou dans l'autre assure donc la rotation de la pièce 18 et de la came 39.

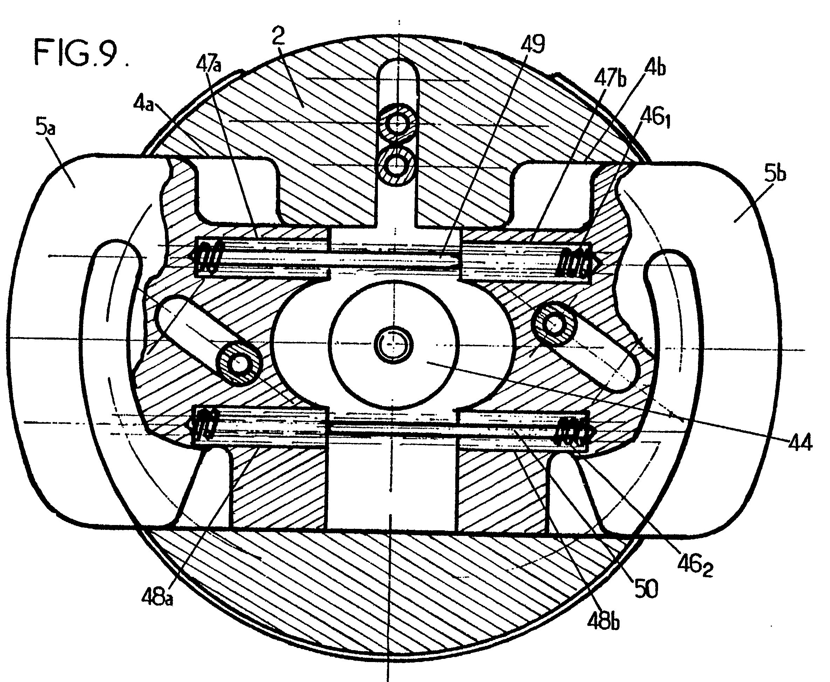

Comme indiqué précédemment et en se référant plus particulièrement à la figure 9, le bouton 2 comporte deux fentes 4a et 4b dans lesquelles sont logées les palettes 5a et 5b assurant la libération des bélières par leur enfoncement lorsque celui-ci est suivi par la rotation du bouton 2, les palettes 5a et 5b étant guidées en translation, par ces fentes 4a et 4b, lorsqu'on appuie sur elles.

Les palettes sont normalement maintenues écartées, l'une de l'autre dans les fentes 4a et 4b au moyen de deux ressorts $46_1$, $46_2$ montés dans des logements 47a, 47b et 48a, 48b ménagés dans les palettes 5a et 5b; pour éviter le flambage des ressorts $46_1$ et $46_2$ on loge dans chaque ressort une tige 49, 50 respectivement.

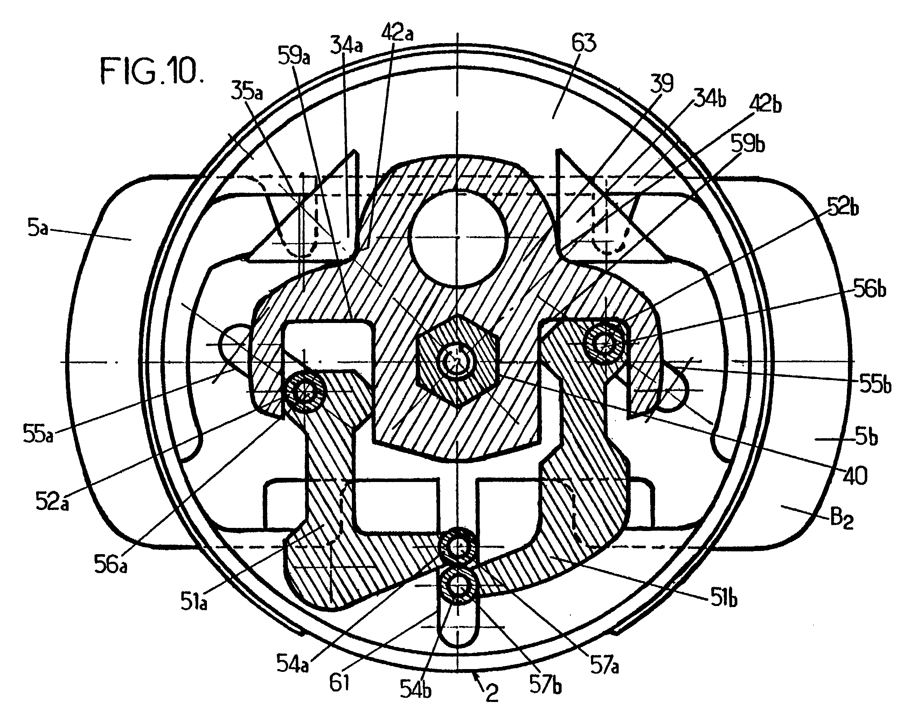

Référence étant maintenant faite plus particulièrement aux figures 10, 11 et 12, on prévoit deux coulisseaux de verrouillage 51a et 51b destinés à interdire la rotation du bouton 2 lorsque les palettes 5a et 5b sont en position écartée ou position "sortie". Chaque coulisseau 51a, 51b porte trois galets 52a, 52b; 53a, 53b; 54a, 54b, par exemple en la matière plastique connue sous la marque Delrin, à savoir
- du côté de la came 39 un galet supérieur 52a, 52b porté par un axe 56a, 56b et logé dans une lumière 55a, 55b de la palette 5a, 5b et
- du côté opposé deux galets 53a, 53b et 54a, 54b portés par un axe 57a, 57b, les deux galets étant portés par cet axe de part et d'autre du coulisseau 51a, 51b.

En outre un patin 58a, 58b en polytétrafluoréthylène, placé sur le coulisseau 51a, 51b, limite le frottement au cours de la translation de celui-ci par rapport à la bague 13.

Dans leur mouvement en translation les coulisseaux 51a, 51b sont guidés, d'une part, par des logements 59a, 59b de section rectangulaire ménagés dans la came 39 et dans lesquels coulissent les têtes 60a et 60b des coulisseaux qui portent les axes 56a et 56b, et, d'autre part, par les galets supérieurs 53a et 53b qui roulent dans une rainure 61 du bouton 2.

Les lumières 55a, 55b des palettes 5a et 5b constituent des rampes à 45° qui commandent, grâce aux galets 52a et 52b, le coulissement des coulisseaux 51a, 51b pour autoriser la rotation de la came 39, les mouvements des deux coulisseaux 51a, 51b étant en sens opposés.

Le galet 54a, 54b du coulisseau 51a, 51b à savoir le galet orienté vers le bas est, lui, logé dans une rainure courte 62 du corps 1, chaque galet échappant à chaque extrémité de ladite rainure lorsque les palettes 5a et 5b sont enfoncées.

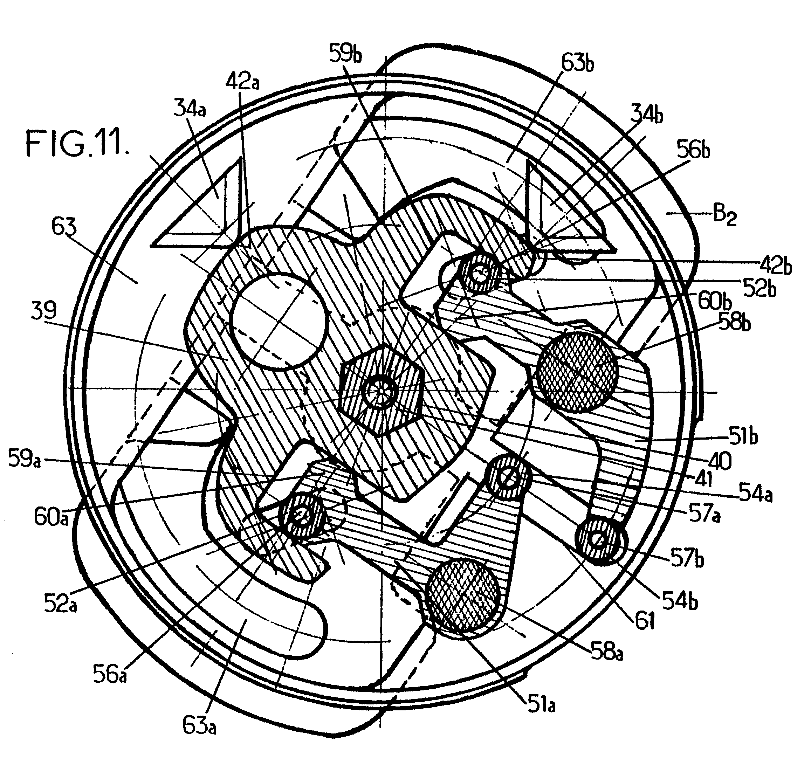

Enfin le bouton 2 comporte sur son fond une rainure arquée 63 qui se prolonge sur les palettes 5a et 5b en 63a et 63b; cette rainure 63, 63a, 63b permet aux verrous 34a et 34b de tourner et libérer les bélières, car, lorsque les palettes 5a et 5b sont enfoncées, les verrous peuvent remonter librement pendant toute la course de rotation du bouton 2. En effet la continuité de la rainure 63, 63a, 63b n'est assuré que lorsque les palettes sont enfoncées, c'est-à-dire se trouvent en position "rentrée" (figure 11). En position "sortie" (figure 10), les palettes 5a et 5b empêchent les verrous 34a, 34b de remonter et les verrous escamotés empêchent les palettes de ressortir. Les ressorts 38a et 38b de rappel des verrous sont plus forts que les ressorts $46_1$ et $46_2$ des palettes 5a et 5b, les verrous tendant de ce fait à enfoncer les palettes jusqu'à ce que ces dernières bloquent les verrous en reprenant leur position normale.

Le fonctionnement de la boucle ventrale qui vient d'être décrite est le suivant.

L'action sur les palettes 5a et 5b amène les rainures 63a et 63b de celles-ci en regard des becquets 42a et 42b des verrous 34a et 34b en autorisant la rotation de ces derniers.

On peut alors introduire les bélières $B_1$ et $B_2$ contre l'action des ressorts 38a et 38b des verrous en faisant remonter ceux-ci et en comprimant la bague-ressort 31.

Dès que les trous $b_3$ et $b_4$ des bélières $B_1$ et $B_2$ sont en regard des plots 15a, 15b et l'embase 12, les bélières $B_1$ et $B_2$ descendent d'elles-mêmes dans leurs logements 32a et 32b sous l'effet des ressorts de rappel 38a et 38b des verrous 34a et 34b, d'une part, et de la forme de la bague-ressort 31, d'autre part. Les verrous reprennent alors leur position basse de la figure 6 et on peut relâcher les palettes 5a et 5b. Les deux bélières $B_1$ et $B_2$ sont alors verrouillées en position.

L'action normalement volontaire de rapprochement des palettes 5a et 5b provoque la translation des coulisseaux 51a et 51b qui s'éloignent l'un de l'autre; les deux galets 54a et 54b qui interdisent la rotation du bouton 2 sortent de la rainure 62 du corps 1 de la boucle ventrale, ce qui permet au bouton 2 de tourner et aux verrous 34a et 34b de remonter pour occuper la position illustrée sur la figure 7, le basculement des deux verrous vers cette position étant réalisé sous l'effet de la came 39.

La rotation du bouton 2 a également pour effet de faire tourner la pièce 18 et donc de faire remonter la pièce éjectrice 22 sous l'effet des rampes prévues sur la pièce 18, rampes qui coopèrent avec les galets 20 de la pièce éjectrice; les bélières $B_1$ et $B_2$ remontent avec la pièce éjectrice jusqu'à atteindre la surface supérieure des deux plots 15a et 15b. A ce moment la bague-ressort 31 se détend et éjecte les deux bélières $B_1$ et $B_2$ hors de leur logement.

Du fait que les galets 20 de la pièce éjectrice 22 passent les sommets $24_2$ des dents de la pièce 18, la boucle ventrale est bloquée en position "ouverte", les galets 53a, 53b des coulisseaux étant maintenus écartés par le profil du corps 1 et viennent en bout de course s'installer dans des crans ménagés dans ce profil. Dans cette position les coulisseaux maintiennent les deux palettes 5a et 5b enfoncées.

Pour assurer le retour de la boucle ventrale à la position neutre, il suffit d'appuyer sur les palettes 5a et 5b et de tourner le bouton 2 pour faire repasser les sommets $24_2$ de la pièce 18 par les galets 20, la boucle ventrale revenant alors d'elle-même à sa position neutre ou normale.

On voit qu'en définitive la boucle ventrale ne comporte que deux positions d'équilibre stable, à savoir la position "éjectée" et la position normale ou neutre.

## Revendications

1. Boucle ventrale de parachute pour siège éjectable, qui comprend, d'une part, un corps (1) comportant une embase ventrale (12) et une bague (13) avec des fentes (4a, 4b) pour la réception des palettes de commande (5a, 5b) et des logements (32a, 32b) pour la réception des bélières ($B_1$, $B_2$), et, d'autre part, un bouton de commande (2) pouvant tourner par rapport au corps (1), et qui est caractérisée en ce qu'elle comprend en outre, à l'intérieur de l'ensemble du corps (1) et du bouton (2):
- des plots (15a, 15b) faisant saillie à partir de l'embase (12) en regard des logements (32a, 32b) pour arrêter les trous ($b_3$, $b_4$) ménagés classiquement dans les bélières ($B_1$, $B_2$),
- une pièce rotative (18) avec des dents périphériques (19) à flancs inclinés ($19_1$) constituant des rampes, les sommets ($24_2$) des dents étant dirigés du côté opposé à l'embase (12),
- des moyens transmettant la rotation du bouton (2) à la pièce rotative (18),
- une pièce éjectrice (22) avec des galets (20) roulant sur lesdits flancs constituant rampes, de manière que la rotation de la pièce (18) avec des dents provoque la translation axiale de la pièce éjectrice, ladite pièce éjectrice (22) portant des fourches (28a, 28b) aptes à agir sur les bélières ($B_1$, $B_2$) pour les éloigner de l'embase (12) en même temps qu'elles,
- des moyens élastiques (23) sollicitant les galets (20) sur les rampes des dents, et
- une bague élastique (31) apte à éjecter les bélières ($B_1$, $B_2$) hors de leurs logements (32a, 32b) lorsque la pièce éjectrice (22) vient dans sa position éloignée de l'embase (12).

2. Boucle ventrale selon la revendication 1, caractérisée en ce qu'elle comporte en outre:
- des verrous (34a, 34b) aptes à basculer entre une première position dans laquelle ils verrouillent les bélières ($B_1$, $B_2$) et une seconde position dans laquelle ils libèrent ces bélières,
- des moyens élastiques (38a, 38b) aptes à maintenir normalement les verrous (34a, 34b) dans leur première position de verrouillage des bélières ($B_1$, $B_2$), et
- des moyens (39) pour amener les verrous (34a, 34b) dans leur seconde position de libération des bélières ($B_1$, $B_2$) lorsque la pièce éjectrice (22) vient dans sa position éloignée de l'embase (12) avec ses galets aux sommets ($24_2$) des dents (19) de la pièce rotative (18).

3. Boucle ventrale selon la revendication 2, caractérisée en ce qu'elle comporte en outre:
- des coulisseaux de verrouillage (51a, 51b),
- des moyens (55a, 55b; 59a, 59b, 61, 62; 52a, 52b; 53a, 53b; 54a, 54b) de guidage des coulisseaux, aptes à les faire se déplacer simultanément en sens opposés depuis une première position de rapprochement vers une seconde position d'éloignement sous l'effet de l'enfoncement des palettes (5a, 5b); et
- des moyens élastiques ($46_1$, $46_2$) tendant à éloigner les palettes et donc à rapprocher les coulisseaux.

4. Boucle ventrale selon l'une quelconque des revendications précédentes, caractérisée en ce que le bouton (2) est fixé sur le corps (1) grâce à un boulon (7) comportant une tête à $n$ languettes flexibles (9) qui coopèrent avec n+1 ou n-1 trous (10) pratiqués dans la partie supérieure du bouton (2), le repliement d'une des languettes dans un desdits trous - repliement qui est toujours possible - empêchant tout desserrage du bouton.

## Patentansprüche

1. Fallschirm-Beckenverschluß für einen Schleudersitz, umfassend: einerseits einen Körper (1), der ein Becken-Sockelteil (12) und einen Ring (13) mit Schlitzen (4a, 4b) zur Aufnahme der Steuerflügel (5a, 5b) und Aufnahmen (32a, 32b) für die Riegel ($B_1$, $B_2$) aufweist, und andererseits einen Steuerknopf (2), welcher bezüglich des Körpers (1) verdrehbar ist, dadurch gekennzeichnet, daß er ferner im Inneren der aus dem Körper (1) und dem Knopf (2) bestehenden Einheit umfaßt:
– Klötzchen (15a, 15b), die aus dem Sockelteil (12) gegenüber den Aufnahmen (32a, 32b) herausragen, um die in herkömmlicher Weise in den Riegeln ($B_1$, $B_2$) angebrachten Löcher ($b_3$, $b_4$) zu arretieren,
– ein drehbares Teil (18) mit Umfangszähnen (19), die geneigte Zahnflanken ($19_1$) aufweisen, welche Rampen bilden, wobei die Scheitel ($24_2$) der Zähne von dem Sockelteil (12) fort gerichtet sind,
– Mittel, welche die Drehung des Knopfes (2) dem drehbaren Teil (18) mitteilen,
– ein Auswurfteil (22) mit Rollen (20), welche auf den Rampen bildenden Flanken rollen, so daß die Drehung des Teiles (18) mit den Zähnen die axiale Translationsbewegung des Auswurfteiles verursacht, wobei dieses Auswurfteil (22) Gabeln (28a, 28b) trägt, die geeignet sind, um auf die Riegel ($B_1$, $B_2$) einzuwirken, um diese von dem Sockelteil (12) gleichzeitig mit ihnen zu entfernen,

– elastische Mittel (23), welche die Rollen (20) auf den Rampen der Zähne beaufschlagen, und

– einen elastischen Ring, der geeignet ist, um die Riegel (B₁, B₂) aus ihren Aufnahmen (32a, 32b) auszustoßen, wenn das Auswurfteil (22) in seine von dem Basisteil (12) entfernte Stellung gelangt.

2. Beckenverschluß nach Anspruch 1, dadurch gekennzeichnet, daß er ferner umfaßt:

– Kippriegel (34a, 34b), die geeignet sind, um zwischen einer ersten Stellung, in welcher sie die Riegel (B₁, B₂) sperren, und einer zweiten Stellung, in welcher sie diese Riegel freigeben, verschwenkt zu werden.

– elastische Mittel (38a, 38b), die geeignet sind, um die Kippriegel (34a, 34b) normalerweise in ihrer ersten Stellung zur Sperrung der Riegel (B₁, B₂) zu halten, und

– Mittel (39), um die Kippriegel (34a, 34b) in ihrer zweiten Stellung zur Freigabe der Riegel (B₁, B₂) zu bringen, wenn das Auswurfteil (22) in seine von dem Sockelteil (12) entfernte Stellung gelangt, wobei seine Rollen sich an den Scheiteln (24₂) der Zähne (19) des drehbaren Teiles (18) befinden.

3. Beckenverschluß nach Anspruch 2, dadurch gekennzeichnet, daß er ferner umfaßt:

– Sperrschieber (51a, 51b),

– Mittel (55a, 55b; 59a, 59b; 61, 62; 52a, 52b; 53a, 53b; 54a, 54b) zur Führung der Schieber, die geeignet sind, um diese zu veranlassen, sich gleichzeitig in entgegengesetzen Richtungen aus einer ersten Stellung der Annäherung in eine zweite Stellung der Entfernung unter der Wirkung des Eindrückens der Flügel (5a, 5b) zu bewegen, und

– elastische Mittel (46₁, 46₂), die bestrebt sind, die Flügel zu entfernen und folglich die Schieber anzunähern.

4. Beckenverschluß nach einem der vorstehenden Ansprüche, dadurch gekennzeichnet, daß der Knopf (2) an dem Körper (1) mittels eines Bolzens (7) befestigt ist, der einen Kopf mit n̲ flexiblen Zungen (9) aufweist, welche mit n+1 oder n−1 Löchern (10) zusammenwirken, welche in dem oberen Teil des Knopfes (2) angebracht sind, wobei die jederzeit mögliche Umbiegung einer der Zungen in eines dieser Löcher jede Lösung des Knopfes verhindert.

## Claims

1. A ventral parachute sling for an ejector seat, which on the one hand comprises a body (1) made up of a ventral base (12) and of a ring (13) with slots (4a and 4b) to receive operating lugs (5a and 5b), and sockets (32a and 32b) to receive attachment rings (B₁ and B₂) and on the other hand an operating knob (2) being able to be turned in relation to the body (1), and which is characterized in that it furthermore comprises, within the totality of the body (1) and of the knob (2):

– heads (15a and 15b) projecting from the base (12) opposite to the sockets (32a and 32b) in order to arrest the holes (b₃ and b₄) produced conventionally in the rings (B₁ and B₂),

– a rotary member (18) with peripheral teeth (19) having inclined flanks (19₁) constituting ramps, the tips (24₂) of the teeth being directed towards the opposite side of the base (12),

– means transmitting the rotation of the knob (2) the rotary member (18),

– an ejecting member (22) with rollers (20) running on the said flanks constituting the ramps in such a manner that the rotation of the member (18) with the teeth causes axial translation of the ejecting member, the said ejecting member (22) having grooves (28a and 28b) adapted to cooperate with the rings (B₁ and B₂) in order to move them away from the base (12) at the same time as they do,

– elastic means (23) urging the rollers (20) onto the ramps of the teeth, and

– an elastic ring (31) in order to eject the rings (B₁ and B₂) out of their sockets (32a and 32b) when the ejecting member (22) assumes a position removed from the base (12).

2. The ventral sling as claimed in claim 1, characterized in that it furthermore comprises:

– latches (34a and 34b) adapted to rock between a first position in which they lock the rings (B₁ and B₂) and a second position in which they free the rings,

– elastic means (38a and 38b) adapted to normally keep the latches (34a and 34b) in their first position latching the rings (B₁ and B₂), and

– means (39) to move the latches (34a and 34b) into their second position freeing the rings (B₁ and B₂) when the ejecting member (22) assumes its position moved away from the base (12) with its rollers at the tips (24₂) of the teeth (19) of the rotary member (18).

3. The ventral sling as claimed in claim 2, characterized in that it furthermore comprises:

– latching guide jaws (51a and 51b),

– means (55a, 55b; 59a, 59b, 61, 62; 52a, 52b, 53a, 53b, 54a and 54b) to guide the guide jaws and adapted to cause them to move simultaneously in opposite directions from a first juxtaposed position into a second spaced apart position under the effect of the inward motion of the lugs (5a and 5b), and

– elastic means (46₁ and 46₂) tending to move the lugs away and thus to move the jaws together.

4. The ventral sling as claimed in any one of the preceding claims, characterized in that the knob (2) is fixed to the body (1) by means of a bolt (7) having a head with n flexible tabs (9) which cooperate with n+1 or n−1 holes (10) produced in the upper part of the knob (2), the bending of one of the tabs into one of the said holes – such bending always being possible – preventing the knob from being undone.

FIG.1.

FIG.2.

FIG.3.

FIG.4.

FIG.5

FIG.6.

FIG.7.

FIG.8.

FIG.9.

EP 0 200 630 B1

FIG.10.

EP 0 200 630 B1

FIG.11.

FIG.12.